# EUROPÄISCHE PATENTANMELDUNG

(11) **EP 3 000 598 A1**
(43) Veröffentlichungstag der Anmeldung: **30.03.2016**
(21) Anmeldenummer: 15184328.1
(22) Anmeldetag: 08.09.2015
(51) Int. Cl.: B32B 17/10, B32B 38/18, B65H 23/038, B65H 35/00

(54) **VERFAHREN UND VORRICHTUNG ZUM AUTOMATISCHEN ABLEGEN EINER FOLIE BEI DER HERSTELLUNG VON VERBUNDSICHERHEITSGLAS**

(30) Priorität: 24.09.2014 DE 102014113851; 20.08.2015 DE 102015113864
(71) Anmelder: Bystronic Lenhardt GmbH, 75242 Neuhausen-Hamberg (DE)
(72) Erfinder: WELLNER, Rupert, 91602 Dürrwangen (DE); HARTMANN, Dieter, 64342 Seeheim-Jugenheim (DE)
(74) Vertreter: Twelmeier Mommer & Partner

(57) **Zusammenfassung**

Die Erfindung betrifft ein Verfahren zum automatischen Ablegen einer thermoplastische Kunststofffolie (2) auf einer liegenden Glastafel (3) bei der Herstellung von Verbundsicherheitsglasscheiben mit folgenden Schritten: Abrollen der Folie (2) von einer Vorratsrolle (71) durch motorisches Drehen der Vorratsrolle (71); Hindurchführen der Folie (2) durch eine geöffnete Klemmvorrichtung (40); Einführen des vorderen Endes der Folie (2) in eine geöffnete Greifvorrichtung (20), die in Laufrichtung (E) hinter der geöffneten Klemmvorrichtung (40) positioniert ist; Greifen des vorderen Endes der Folie (2) entlang des vorderen Randes (21) der Folie (2) durch Schließen der Greifvorrichtung (20); Wegbewegen der geschlossenen Greifvorrichtung (20) mit dem darin gehaltenen vorderen Rand (21) der Folie von der geöffneten Klemmvorrichtung (40); Führen der Folie (2) über die Glastafel (3) hinweg, ohne dass die Folie (2) die Glastafel (3) berührt; Stoppen des Drehens der Vorratsrolle (71) und der Bewegung der Greifvorrichtung (20); Einklemmen der Folie (2) quer zur Laufrichtung durch Schließen der Klemmvorrichtung (40); Ablegen des vorderen Endes (21) der Folie (2) auf der Glastafel (3) durch Öffnen der Greifvorrichtung (20); Abschneiden der Folie (2) vom Vorrat (2a, 71) entlang der Klemmvorrichtung (40); Öffnen der Klemmvorrichtung (40), sowie eine Vorrichtung zur Durchführung des Verfahrens.

## Beschreibung

Die Erfindung geht aus von einem Verfahren und einer Vorrichtung zum automatischen Ablegen einer thermoplastischen Kunststofffolie auf einer liegenden, insbesondere horizontal liegenden, Glastafel bei der Herstellung von Verbundsicherheitsglasscheiben.

Ein derartiges Verfahren und eine derartige Vorrichtung sind aus der DE 20 2004 008 224 U1 bekannt. Die Folie wird von einer als "Coil" bezeichneten Vorratsrolle, auf der eine Folienbahn aufgewickelt ist, abgerollt. Es ist eine Abrolleinrichtung zum Aufnehmen der Vorratsrolle vorgesehen. Die Folie wird so über eine Folienabzugswalze geführt, dass die Folie die Abzugswalze mit einem gewünschten Umschlingungswinkel umschlingt. Die Folienabzugswalze ist bezüglich ihrer Umfangsgeschwindigkeit mit der Vorschubgeschwindigkeit der Glasscheibe, die auf einer Transportstrecke aufliegt, synchronisiert. Der Folienabzugswalze ist eine Besäumeinrichtung zugeordnet, welche Quetschmesser umfasst, welche ein Besäumen der Längskanten der Folien derart durchführen, dass die Quetschmesser gegen die Folienabzugswalze anliegen und drücken. Während des Transports der Glastafel auf der Transportstrecke wird die Folie auf der Glastafel abgelegt.

Ein Verfahren und eine Vorrichtung der eingangs genannten Art sind auch aus der DE 698 31 280 T2 bekannt. Eine Folienbahn ist auf einer frei drehbar gelagerten Vorratsrolle aufgewickelt und wird mittels eines Abzugswalzenpaares von der Vorratsrolle abgezogen. Das Abzugswalzenpaar enthält zwei aneinander gepresste Walzen mit parallel zueinander liegenden Drehachsen. Eine der Walzen des Abzugswalzenpaares ist von einem Antriebsmotor rotierbar. Die durch das Abzugswalzenpaar abgezogene Folienbahn wird vertikal nach unten durch eine Klemmvorrichtung, welche eine Schneideinrichtung zum Abschneiden der Folie quer zur Laufrichtung enthält, hindurch zu einer Greifvorrichtung für den vorderen Rand der Folie geführt. Die Greifvorrichtung für den vorderen Rand der Folie hält diesen in der Nähe einer der Außenkanten einer Glastafel fest, während ein Läufer mit einer frei drehbaren Umlenktrommel, welche von der Folienbahn V-förmig umschlungen wird, über die Glastafel hinweg verschoben wird, um einen vom Vorrat abgeschnittenen Folienabschnitt auf der Glastafel abzulegen. Der Zuführvorgang des vorderen Randes der Folie ausgehend von dem Abzugswalzenpaar erfolgt automatisch, indem der vordere Rand der Folie aufgrund der auf den vorderen Rand der Folie wirkenden Schwerkraft freihängend durch die Klemmvorrichtung hindurch bis in die geöffnete Greifvorrichtung hinein geführt wird.

Darüber hinaus ist es bei der Herstellung von Verbundsicherheitsglasscheiben üblich, eine Folie manuell auf eine liegende Glastafel abzulegen und dort durch manuelles Verschieben bezüglich der Glastafel auszurichten.

Der Erfindung liegt die Aufgabe zugrunde, ein verbessertes Verfahren und eine verbesserte Vorrichtung zum automatischen Ablegen einer thermoplastischen Kunststofffolie auf einer liegenden Glastafel bei der Herstellung von Verbundsicherheitsglasscheiben zu schaffen.

Die Aufgabe wird durch ein Verfahren mit den Merkmalen des Anspruchs 1 und durch eine Vorrichtung mit den Merkmalen des Anspruchs 11 gelöst. Vorteilhafte Weiterbildungen sind Gegenstand der Unteransprüche.

Bei der Herstellung von Verbundsicherheitsglas wird eine erste Glastafel, insbesondere eine ebene Glastafel, auf eine Auflage gelegt, welche als Riemen- oder Rollenförderstrecke ausgebildet sein kann. Auf die erste Glastafel wird zumindest eine thermoplastische Kunststofffolie, insbesondere aus Polyvinylbutyral (PVB), aufgelegt, welche größer als die Glastafel ist, so dass die Folie alle Außenkanten der Glastafel überragt. Die erfindungsgemäße Vorrichtung enthält eine Abrolleinrichtung zum Aufnehmen einer Vorratsrolle mit einem Antrieb zum Drehen der Vorratsrolle, auf der eine Folienbahn aufgewickelt ist. Die Folie wird durch motorisches Drehen der Vorratsrolle abgewickelt. Die Vorratsrolle sitzt auf einer Wickelwelle, welche drehbar gelagert sein kann. Die Wickelwelle ist mit dem Antrieb zum Drehen der Vorratsrolle gekoppelt und kann von diesem motorisch gedreht werden, insbesondere zum Abwickeln der Folienbahn. Der vordere Rand der Folie wird automatisch aufgrund der auf ihn wirkenden Schwerkraft durch eine geöffnete Klemmvorrichtung hindurchgeführt. Die Abrolleinrichtung zum Aufnehmen der Vorratsrolle kann hierzu derart oberhalb eines Schachtes angeordnet und die Klemmvorrichtung derart unterhalb des Schachtes angeordnet sein, dass ein von der Vorratsrolle abgewickelter vorderer Rand der Folie automatisch aufgrund der auf ihn wirkenden Schwerkraft durch den Schacht und die geöffnete Klemmvorrichtung hindurchrutschen kann. Die Klemmvorrichtung ist in Laufrichtung der Folie vor der Auflage für die Glastafel angeordnet. Das durch die Klemmvorrichtung hindurchgeführte vordere Ende der Folie wird weiter aufgrund der auf ihn wirkenden Schwerkraft durch die Vorrichtung geführt und in eine geöffnete Greifvorrichtung eingeführt. Die Greifvorrichtung ist in Laufrichtung hinter der geöffneten Klemmvorrichtung positioniert und ist über der Auflage in Laufrichtung der abgerollten Folie bewegbar. Durch Schließen der Greifvorrichtung wird das vordere Ende der Folie entlang des vorderen Randes der Folie gegriffen. Das vordere Ende der Folie wird durch ihren vorderen Rand begrenzt. Anschließend wird die geschlossene Greifvorrichtung mit dem darin gehaltenen vorderen Rand der Folie von der geöffneten Klemmvorrichtung wegbewegt. Die Folie wird von der Greifvorrichtung über die Glastafel hinweggeführt, ohne dass die Folie die Glastafel berührt. Die geschlossene Greifvorrichtung wird dabei in Laufrichtung, insbesondere parallel zu der Auflage für die Glastafel, bewegt, insbesondere über die gesamte Länge der Glastafel. Ist die benötigte Länge der Folie abgewickelt, wird das Drehen der Vorratsrolle und die Bewegung der Greifvorrichtung gestoppt. Nun wird die Folie quer zur Laufrichtung durch Schließen der Klemmvorrichtung eingeklemmt, insbesondere über die gesamte Breite der Folie, und das vordere Ende der Folie durch Öffnen der Greifvorrichtung auf der Glastafel abgelegt. Vor dem Öffnen der Greifvorrichtung kann die Greifvorrichtung senkrecht auf die Glastafel zubewegt werden. Ein zwischen der Klemmvorrichtung und der Greifvorrichtung durchhängender Bereich der Folie legt sich dadurch auf der Glastafel ab. Nach dem Einklemmen der Folie in der Klemmvorrichtung wird die Folie entlang der Klemmvorrichtung vom Vorrat abgeschnitten. Anschließend wir die Klemmvorrichtung geöffnet. Der hintere Rand der abgeschnittenen Folie rutscht dadurch aus der Klemmvorrichtung heraus und legt sich auf die Glastafel. Nach dem Abschneiden erfolgt ein Aufwickeln der Folienbahn auf die Vorratsrolle durch motorisches Drehen der Vorratsrolle entgegen der Laufrichtung. Dabei wird wenigstens ein Teil der in der Vorrichtung hängenden und noch mit der Vorratsrolle verbundenen Folienbahn wieder aufgewickelt und zurückgezogen, insbesondere bis zu einer Referenzposition, welche beispielsweise durch einen den vorderen Rand der Folie detektierenden Sensor gebildet werden kann. Die Glastafel wird vor dem Abrollen der Folie, insbesondere durch einen Glastafel-Greifer, in der für das Ablegen der Folie benötigten Position auf der Auflage abgelegt und während des Abrollens und Ablegens der Folie nicht bewegt. Die Folie wird so auf der Glastafel abgelegt, dass die Folie über alle Außenkanten der Glastafel hinausragt.

Die Erfindung hat wesentliche Vorteile:
- Bei der Herstellung von Verbundsicherheitsglas werden heutzutage beschichtete Glastafeln eingesetzt. Die verwendeten Beschichtungen sind oftmals sehr empfindlich und können bereits beschädigt werden, wenn die Folie über die Oberfläche der Glastafel gezogen wird. Durch die vorliegende Erfindung kann die Folie automatisch auf der Glastafel abgelegt werden, ohne dass die Folie über die Glastafel gezogen wird. Die Folie wird auf der Glastafel abgelegt, ohne dass eine Gleitbewegung der Folie auf der Glastafel auftritt. Dies wird insbesondere dadurch gewährleistet, dass die Folie in einem Abstand über die Glastafel hinweggeführt wird und erst anschließend auf die Glastafel abgelegt wird.
- Es lässt sich eine faltenfreie Ablage der Folie auf der Glastafel gewährleisten.
- Es ist kein manuelles Einfädeln des vorderen Randes der Folie in die Vorrichtung erforderlich, da der vordere Rand der Folie automatisch aufgrund der auf ihn wirkenden Schwerkraft bis in die Greifvorrichtung hinein rutschen kann. Die Anordnung der Abrolleinrichtung, des Schachtes, der Klemmvorrichtung und der Greifvorrichtung ermöglichen, dass der vordere Rand der Folie ungefasst, insbesondere in frei hängender und/oder rutschender Weise, im Wesentlichen zugspannungsfrei zugeführt werden kann. Die verwendeten Folien sind, auch wenn sie eine Dicke von einigen Zehntelmillimetern, beispielsweise 0,38 mm, aufweisen, zugkraftempfindlich und können sich unter Zugkrafteinwirkung unzulässig verformen, so dass die Verbundsicherheitsglasscheibe mangelhaft wird. Mit der vorliegenden Erfindung lässt sich die Folie automatisch ohne äußere Zugspannungseinwirkung in die Vorrichtung einfädeln und der Glastafel zuführen. Es tritt lediglich eine geringe Zugspannungsbelastung der Folie durch das Eigengewicht der freihängenden Abschnitte der Folienbahn auf, welche nicht zu Beeinträchtigungen führt.
- Die eingangs erwähnten, bekannten Vorrichtungen weisen Umlenkwalzen auf, welche die Folienbahn scharf umlenken. Sie haben nämlich teilweise einen Umschlingungswinkel von fast 180°. Dabei können Beschädigungen der empfindlichen Folie auftreten. Bei der vorliegenden Erfindung kann die Folie dagegen ohne scharfe Umlenkung über die Glastafel geführt und darauf abgelegt werden. Insbesondere ist jedes Umlenkmittel für die Folie, welches die Folienbahn auf ihrem Weg von der Vorratsrolle bis zu der Greifvorrichtung führt und umlenkt, wie beispielsweise jede Umlenkrolle, in einer Weise angeordnet, dass dort der Umschlingungswinkel der Folienbahn weniger als 90° beträgt. Beschädigungen der Folie lassen sich dadurch vermeiden.
- Die Folie lässt sich so auf der Glastafel ablegen, dass die Folie alle Außenkanten der Glastafel überragt. Ein nachträgliches, insbesondere manuelles, Ausrichten der auf der Glastafel liegenden Folie ist nicht mehr erforderlich.
- Durch das direkte motorische Drehen der Vorratsrolle kann diese sowohl in Laufrichtung als auch entgegen der Laufrichtung gedreht werden. Hierdurch kann die Folienbahn nach dem Abschneiden des auf die Glastafel abgelegten Abschnitts der Folie bis zu der Referenzposition zurückgezogen werden, wodurch die Genauigkeit der der Glastafel zugeführten Länge der Folie gesteigert und auch dauerhaft hoch gehalten werden kann. Außerdem kann nach dem Zurückziehen für die nachfolgend herzustellende Verbundsicherheitsglasscheibe automatisch eine andere Folie von einer Vorratsrolle anderer Breite zugeführt werden.

Auf die auf der ersten Glastafel liegende Folie wird eine zweite Glastafel gelegt. Dies erfolgt durch einen Glastafel-Greifer, welcher Saugeinrichtungen enthält, mit denen die Glastafel angehoben werden kann. Es sind Laufschienen parallel zu der Auflage angeordnet, auf denen die Greifvorrichtung verfahrbar ist. Die Laufschienen können oberhalb der Greifvorrichtung, insbesondere auch oberhalb der Klemmvorrichtung, angeordnet sein. Der Glastafel-Greifer ist auf denselben Laufschienen wie die Greifvorrichtung verfahrbar. Der Abstand der Greifvorrichtung über der Auflage für die Glastafel kann veränderbar sein, insbesondere bis über die oberhalb der der Auflage für die Glastafel angeordnete Klemmvorrichtung hinaus. Die Auflage für eine Glastafel kann mehrere antreibbare Rollen enthalten, deren Drehachsen in einer horizontalen Ebene liegen. Nach dem Ablegen der zweiten Glastafel wird die über die Außenkanten der Glastafeln herausragende Folie derart beschnitten, dass die Folie an allen Außenkanten einen gleichmäßigen Überstand aufweist, der bevorzugt im Bereich von 1 mm bis 4 mm liegt. Dieses Besäumen der herausragenden Folie kann manuell oder automatisch erfolgen. Für ein manuelles Besäumen kann die Auflage für die Glastafel bzw. das Glastafelpaket gleichzeitig eine für eine Bedienperson gut zugängliche Besäumstation darstellen. Die Auflage kann hierzu motorisch breitenverstellbar sein, um ihre Breite an die Breite der Glastafel anpassen zu können und dadurch eine gute Zugänglichkeit zu gewährleisten. Anschließend wird das Paket aus den Glastafeln mit der dazwischen liegenden Folie in an sich bekannter Weise unter Wärmeeinwirkung zu einer Verbundsicherheitsglasscheibe verpresst. Alternativ können vor dem Verpressen noch weitere Glastafeln unter Zwischenlage einer oder mehrerer Folien in gleicher Weise aufgelegt und anschließend beschnitten werden. Die Folie bildet eine flexible Schicht zwischen den Glastafeln und bindet im Falle eines Bruchs der fertigen Scheibe Glassplitter.

Bevorzugt enthält die Klemmvorrichtung zwei Klemmleisten zum Einklemmen der Folie, die sich quer zur Laufrichtung über die gesamte Breite der Folie erstrecken. Insbesondere enthält die Klemmvorrichtung zwei Klemmleistenpaare zum Einklemmen der Folie, die sich quer zur Laufrichtung über die gesamte Breite der Folie erstrecken und zwischen denen die Schneideinrichtung angeordnet ist. Die Klemmvorrichtung ist bevorzugt verfahrbar und wird vor dem Hindurchführen der Folie aus einer Parkposition in eine Arbeitsposition oberhalb einer Außenkante der Glastafel gefahren. Die geöffnete Greifvorrichtung kann anschließend in Laufrichtung hinter die in ihrer Arbeitsposition stehende Klemmvorrichtung gefahren werden. Die Klemmvorrichtung kann im Anschluss an ihr nach dem Abschneiden der Folie erfolgendes Öffnen wieder in ihre Parkposition zurückgefahren werden. Die Folie kann von der Klemmvorrichtung quer zur Laufrichtung über die gesamte Breite der Folie eingeklemmt werden und wird anschließend durchgeschnitten. Das Vorsehen einer Parkposition für die Klemmvorrichtung ist vorteilhaft, um oberhalb der Glastafel genügend Platz für die Bewegungen des Glastafel-Greifers zu schaffen.

Es ist vorteilhaft, wenn die Länge der abgerollten Folie, insbesondere durch ein auf die Folie aufgesetztes Messrad, gemessen wird und das Drehen der Vorratsrolle nach dem Abrollen einer auf die Länge der Glastafel abgestimmten Länge der Folie gestoppt wird. Bevorzugt kann das Messrad auf die Vorratsrolle aufgesetzt werden. Nach dem Abschneiden der Folie kann die Vorratsrolle motorisch entgegen der Laufrichtung gedreht werden, um die zwischen Vorratsrolle und Klemmvorrichtung befindliche Folienbahn wieder aufzuwickeln. Dies ist insbesondere dann vorteilhaft, wenn in der Vorrichtung eine Abrolleinrichtung vorgesehen ist, welche mehrere Vorratsrollen unterschiedlicher Breite aufnehmen kann. Für die nächste Glastafel kann dann eine Folie von derjenigen Vorratsrolle abgerollt werde, welche die am besten zu der Breite der Glastafel passende Folienbreite enthält.

In weiterer Ausgestaltung der Erfindung kann vor dem Hindurchführen der Folie durch die geöffnete Klemmvorrichtung eine Leiteinrichtung in die geöffnete Klemmvorrichtung eingeschoben werden, um den vorderen Rand der Folie durch die geöffnete Klemmvorrichtung hindurchzuleiten. Die Leiteinrichtung kann wieder aus der geöffneten Klemmvorrichtung herausgefahren werden, wenn der vordere Rand der Folie durch die Greifvorrichtung gegriffen wurde. Hierdurch wird ein störungsfreies Hindurchführen der Folie durch die Klemmvorrichtung gewährleistet, ohne dass sich die Folie in der Klemmvorrichtung oder den darin enthaltenen Klemmleisten verhakt. Bevorzugt leitet die Leiteinrichtung den vorderen Rand der Folie bis in die geöffnete Greifvorrichtung hinein.

In weiterer vorteilhafter Ausgestaltung kann die Vorrichtung eine Schneidvorrichtung zum automatischen Abschneiden der über Außenkanten der Glastafel herausragenden Folie enthalten. Die Schneidvorrichtung kann ein Untermesser und ein Obermesser enthalten. Jedes der Messer kann scheibenförmig sein, eine entlang seines äußeren Umfangs umlaufende Schneide haben und drehbar um eine Drehachse gelagert sein. Die beiden Messer können so zueinander angeordnet sein, dass die beiden Schneiden sich zumindest an einem Punkt berühren. Das Obermesser kann drehfest mit einer Antriebswelle verbunden sein, welche von einem Motor antreibbar ist. Der Motor kann das Obermesser in eine Rotation um dessen Drehachse versetzen. Das Untermesser kann frei drehbar gelagert sein. Jedes Messer hat eine Flanke, die sich auf einer seiner Seiten von seiner Schneide in Richtung zu seiner Drehachse erstreckt. Die Flanke des Untermessers ist der Flanke des Obermessers zugewandt. Die Flanken der beiden Messer überdecken sich abschnittsweise, um ein scherenartiges aneinander Entlanggleiten der Schneiden der beiden Messer zum Durchtrennen der Folie zu ermöglichen. Die Schneide des Obermessers kann entlang seiner Drehachse gesehen eine von der Kreisform abweichende Form aufweisen, welche insbesondere die Form eines Vieleckes oder Polygons haben kann. Die von der Kreisform abweichende Schneide kann an mehreren entlang des Umfangs des Obermessers verteilten Stellen, bei denen es sich insbesondere um die Ecken des Vieleckes handelt, den gleichen Abstand zur Drehachse des Obermesser aufweisen. Zwischen jeweils zwei der Stellen, deren Abstand zur Drehachse des Obermessers gleich ist, verändert die Schneide ihren Abstand zur Drehachse des Obermessers stetig. Bevorzugt kann die von der Kreisform abweichende Schneide an mehr als fünf gleichmäßig am Umfang des Messers verteilten Stellen den gleichen Abstand zur Drehachse des Messers aufweisen, insbesondere hat das Vieleck mehr als fünf Ecken, bevorzugt fünf bis zehn Ecken. An einem Träger der Schneidvorrichtung kann eine drehbar gelagerte Führungsrolle zum Anlegen an einer Außenkante einer der Glastafeln angeordnet sein, welche eine vorbestimmte Position zu den Schneiden der beiden Messer hat. Zwischen den beiden scheibenförmigen Messern lässt sich die Folie wie mit einer Schere schneiden, wodurch sich ein sehr sauberer Schnitt der Folie erreichen lässt. Eine "Krümelbildung", bei welcher durch das Messer beim Durchtrennen der Folie kleine Folienstücke an der Schnittkante der Folie abgetrennt werden, welche dann die Vorrichtung und/oder die Glastafeln verschmutzen können, wird so vermieden. Außerdem sind die auf die Folie ausgeübten Zug- und Biegekräfte gering, so dass ein unzulässiges Verziehen der Folie in dem Randbereich der Glastafeln vermieden wird.

In weiterer vorteilhafter Ausgestaltung der Erfindung kann es vorteilhaft sein, beim Zuführen der Folie zu der Glastafel durch zwei quer zur Laufrichtung beabstandete Sensoren zwei Maximalpositionen für einen seitlichen Rand der Folie in einem Abstand senkrecht zu einer Außenkante der Glastafel zu definieren, so dass die Folie nach dem Ablegen auf der Glastafel um ein zwischen den beiden Maximalpositionen liegendes Maß über diese Außenkante der Glastafel hinausragt. Es kann ein Walzenpaar zum Hindurchführen zumindest eines seitlichen Randbereichs der Folienbahn vorgesehen sein, welches parallel zueinander liegende Drehachsen aufweist, die parallel zur Folienbahn und schräg zur Laufrichtung der Folienbahn orientiert sind. Eine der Walzen kann mit einem Antrieb zum Rotieren der Walze gekoppelt sein. Eine steuerbare Anpresseinrichtung, mit welcher die beiden Walzen beim Hindurchführen der Folienbahn mit veränderbarer Anpresskraft gegeneinander gepresst werden können, kann mit einer der Walzen gekoppelt sein. Während des Hindurchführens der Folienbahn durch das Walzenpaar, insbesondere beim automatischen Zuführen des vorderen Randes der Folie zu der Greifvorrichtung aufgrund der auf ihn wirkenden Schwerkraft, kann die Anpresskraft der beiden Walzen verändert werden, so dass der seitliche Rand der Folie zwischen den beiden zuvor definierten Maximalpositionen bleibt. Der Winkel der Drehachse der beiden Walzen des Walzenpaares kann so gerichtet sein, dass der seitliche Rand der Folie in eine erste Querrichtung bezüglich der Laufrichtung der Folie wandert, wenn die Anpresskraft der Walzen erhöht wird. Dabei kann die erste Querrichtung von der Mitte der Folienbahn zu dem seitlichen Rand der Folienbahn gerichtet sein, welcher durch das Walzenpaar hindurchläuft. Wenn die Folienbahn beim Abrollen in eine zweite Querrichtung bezüglich der Laufrichtung der Folie wandert, die entgegengesetzt zu der ersten Querrichtung gerichtet ist, kann die Anpresskraft der Walzen des Walzenpaares erhöht werden, um die Folie wieder in die erste Querrichtung zu ziehen. Dadurch lässt sich der seitliche Rand der Folie mit einer Zweipunktregelung zwischen den beiden definierten Maximalpositionen halten. Es kann ein genaues Zuführen der Folie zu der Greifvorrichtung und anschließend zu der Glastafel erreicht werden. Die Folie wird dadurch sehr genau auf der Glastafel abgelegt, so dass ein nachträgliches Ausrichten der auf der Glastafel abgelegten Folie, bei welchem eine empfindliche Oberflächenbeschichtung der Glastafel beschädigt werden könnte, nicht mehr erforderlich ist.

In weiterer Ausgestaltung kann die Abrolleinrichtung zum Aufnehmen mehrerer Vorratsrollen ausgebildet sein, wobei für jede der Vorratsrollen ein separater Antrieb zum Drehen der jeweiligen Wickelwelle vorgesehen sein kann. Die Wickelwelle kann an zwei Stellen neben der Vorratsrolle drehbar gelagert sein. Jede Lagerung der Wickelwelle kann durch zwei frei drehbar gelagerte Stützrollen gebildet werden. So lässt sich eine leere Vorratsrolle sehr einfach gegen eine volle Vorratsrolle auswechseln. Die Wickelwelle mit der leeren Vorratsrolle wird vom Antrieb abgekoppelt und von den Stützrollen abgehoben, anschließend wird die Wickelwelle in eine volle Vorratsrolle eingesteckt und diese mit einer Hebeeinrichtung oder einem Kran auf die Stützrollen gehoben. Abschließend wird die Wickelwelle wieder mit dem Antrieb gekoppelt.

Weitere Vorteile und Merkmale ergeben sich aus der nachfolgenden Beschreibung eines Ausführungsbeispiels in Verbindung mit den Figuren. Es zeigen:
- Figur 1: eine schematische Seitenansicht auf eine Vorrichtung zum automatischen Zuführen und Ablegen einer Folie auf einer Glastafel,
- Figur 2: eine schematische Seitenansicht der Vorrichtung der Figur 1 zu einem anderen Zeitpunkt,
- Figur 3: eine schematische Draufsicht in Richtung des Pfeiles III auf einen Teil der Vorrichtung der Figur 1, wobei eine in Figur 1 schräg verlaufende Folienbahn und die zu ihr benachbarten Teile in die Zeichenebene geklappt wurden,
- Figur 4: eine schematische Draufsicht in Richtung des Pfeiles IV auf einen Schneidvorrichtungen enthaltenden Teil der Vorrichtung der Figur 1,
- Figur 5: einen Querschnitt durch eine in der Vorrichtung der Figur 1 eingesetzte Klemmvorrichtung,
- Figur 6: eine perspektivische Ansicht einer in der Vorrichtung der Figur 1 eingesetzten Abrollreinrichtung für die Folie,
- Figur 7: eine schematische Draufsicht in Richtung des Pfeiles IV auf eine in der Vorrichtung der Figur 1 eingesetzte Auflage für die Glastafel,
- Figur 8: eine Seitenansicht in Richtung des Pfeiles K auf eine in der Vorrichtung der Figur 1 eingesetzte Auflage für die Glastafel.

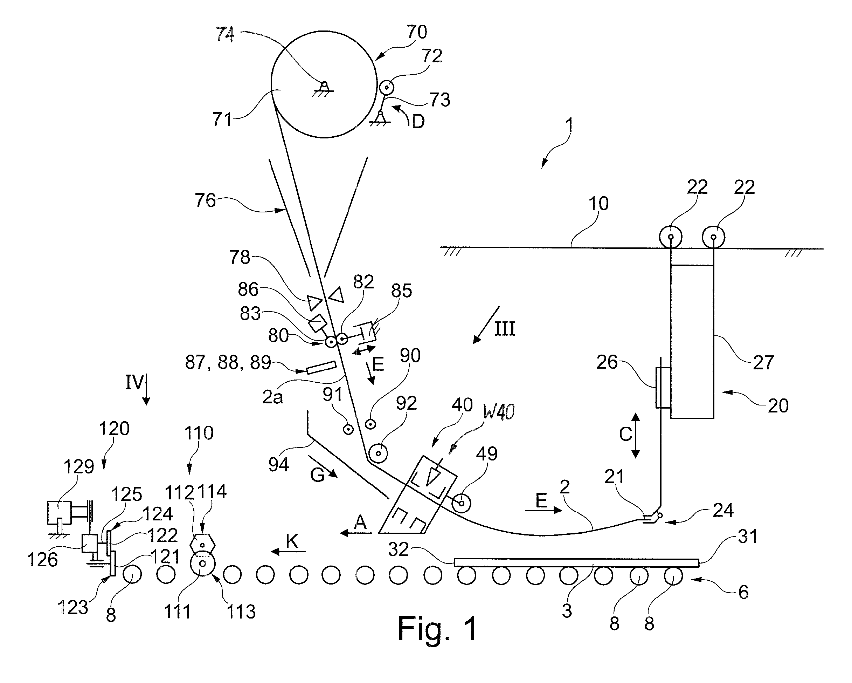

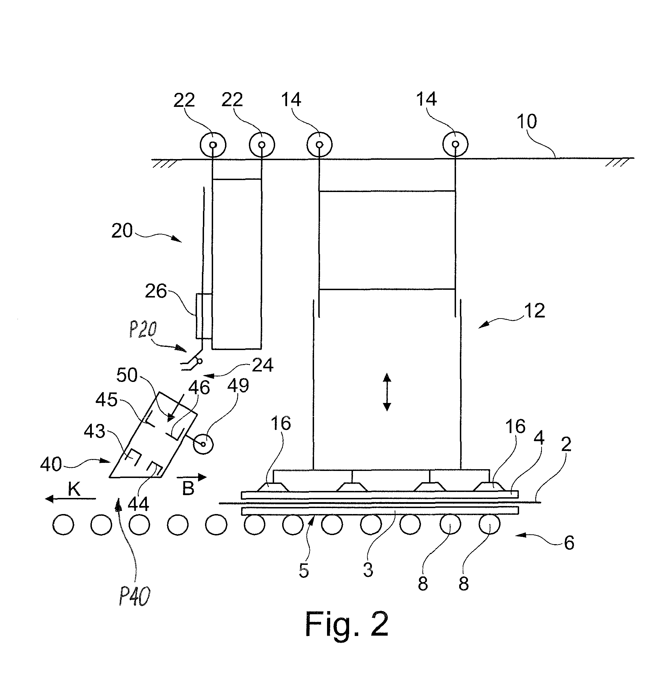

Eine in Figur 1 dargestellte Vorrichtung 1 zum automatischen Ablegen einer Folie 2 auf einer ebenen Glastafel 3 ist Teil einer Anlage zur Herstellung von Verbundsicherheitsglas. In der Vorrichtung 1 wird die Folie 2 einer ersten Glastafel 3 zugeführt und darauf abgelegt. Anschließend wird auf die Folie 2 eine zweite Glastafel 4 gelegt, siehe Figur 2. Auf das aus den Glastafeln 3, 4 und der Folie 2 gebildete Glastafelpaket 5 können optional weitere Folien und Glastafeln aufgelegt werden. Aus dem Glastafelpaket 5 wird anschließend durch ein an sich bekanntes Verpressen unter Wärmeeinwirkung eine Verbundsicherheitsglasscheibe hergestellt.

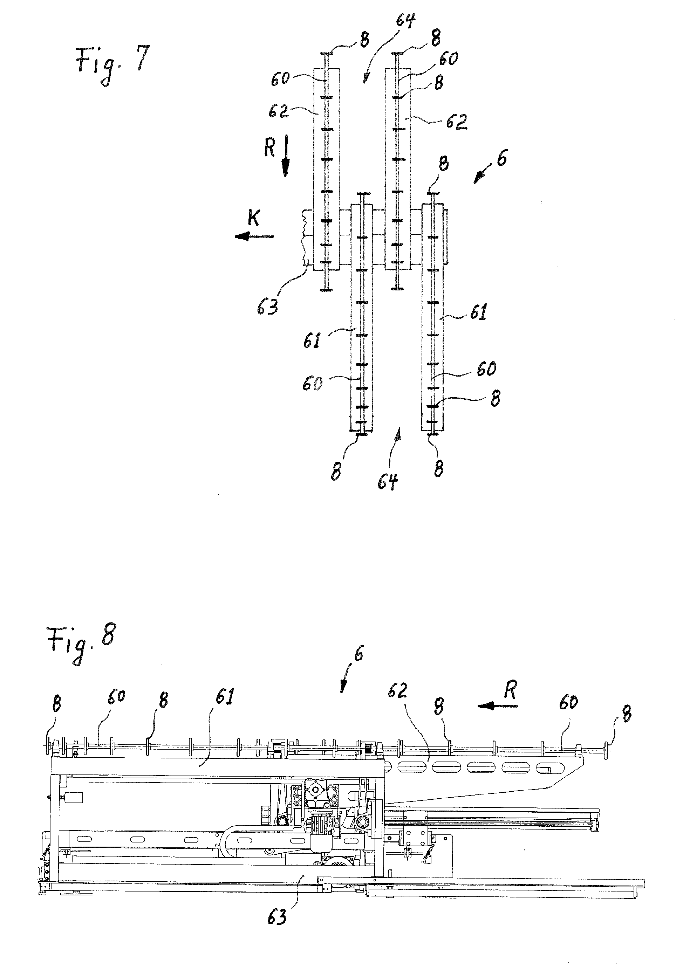

Die Vorrichtung 1 enthält eine Auflage 6, welche als Rollenförderstrecke ausgebildet ist und mehrere Rollen 8 enthält, deren Drehachsen in einer horizontalen Ebene liegen und eine Auflageebene für die Glastafel 3 bilden, siehe Figuren 1, 7 und 8, wobei in den Figuren 7 und 8 die Glastafel weggelassen wurde. Es sind jeweils mehrere Rollen 8 drehfest auf einer Welle 60 angeordnet, welche von einem Antrieb drehbar ist. Jede Welle 60 ist auf einem Träger 61, 62 gelagert. Die Träger 61 sind unbeweglich an einem stationären Grundgestell 63 befestigt. Die Träger 62 sind über Linearführungen entlang des Pfeiles R verschiebbar an dem Grundgestell 63 angeordnet. Die Träger 61, 62 sind jeweils parallel und beabstandet zueinander angeordnet, siehe Figur 7, wobei dort nur jeweils zwei Träger 61 und 62 dargestellt sind, die Auflage 6 jedoch je nach benötigter Länge der Auflage 6 und der benötigten Anzahl von in Transportrichtung K hintereinander angeordneten Rollen 8, siehe Figur 1, eine Vielzahl von in gleicher Weise in Transportrichtung K hintereinander angeordneten Trägern 61, 62 enthalten kann. Jeweils zwei der Träger 61 bzw. 62 sind derart zueinander beabstandet, dass dazwischen ein für eine Bedienungsperson zugänglicher Freiraum 64 gebildet wird. Auch wenn das Ablegen der Folie 2 automatisch erfolgt, kann zu Kontrollzwecken eine Bedienungsperson anwesend sein, welche bei Bedarf auch noch etwaige, auf der Glastafel oder der Folie verbliebene Fusseln herunterblasen kann. Die Freiräume 64 ermöglichen der Bedienperson einen guten Zugang zu dem auf der Auflage 6 zu bildenden Glastafelpaket 5.

Die Vorrichtung 1 enthält parallel zur Auflage 6 angeordnete Laufschienen 10 und einen Glastafel-Greifer 12 zum Befördern der Glastafel 3 in die für das Ablegen der Folie 2 benötigte Position, siehe Figur 2. Die Laufschienen 10 sind in einem derartigen Abstand über der Auflage 6 bzw. über dem Fußboden, auf welchem das Grundgestell 63 steht, angeordnet, so dass sie oberhalb der Kopfhöhe einer an die Auflage 6 herantretenden Bedienperson angeordnet sind und ihren Zugang nicht behindern. Der Glastafel-Greifer 12 weist Rollen 14 auf, mit denen er auf den Laufschienen 10 verfahrbar ist. Der Glastafel-Greifer 12 enthält Saugeinrichtungen 16, welche in ihrer Höhe über der Auflage 6 veränderbar sind. Ein derartiger Glastafel-Greifer 12 ist beispielsweise aus der DE 10 2012 111 669 A1 bekannt. Der Glastafel-Greifer 12 kann auf den Laufschienen 10 entgegen der Transportrichtung K nach rechts in einen Bereich außerhalb der Figur 2 verfahren werden und dort die Glastafel 3 von einem Glastafel-Stapel holen und in der in Figur 1 dargestellten Position auf der Auflage 6 ablegen.

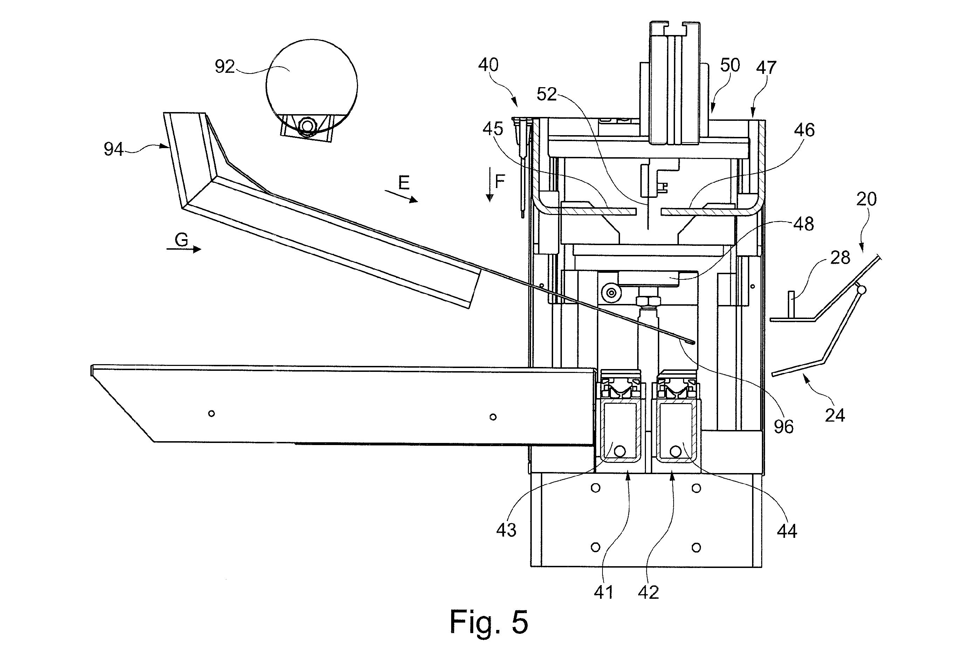

Die Vorrichtung 1 enthält eine Greifvorrichtung 20 für den vorderen Rand 21 der Folie 2 und eine Klemmvorrichtung 40 zum Hindurchführen der Folie 2 und zum Einklemmen der Folie 2. Die Greifvorrichtung 20 enthält Rollen 22, mit welchen die Greifvorrichtung 20 auf den Laufschienen 10 verfahrbar ist. Der Greifvorrichtung 20 ist ein gesteuerter Antrieb (nicht dargestellt) zum Verfahren der Greifvorrichtung 20 auf den Laufschienen 10 zugeordnet. Die Laufschienen 10 sind so lang ausgebildet, dass die Greifvorrichtung 20 über die gesamte Länge der stationär auf der Auflage 6 liegenden Glastafel 3 und ihre Außenkanten 31 und 32 verfahren werden kann. Die Laufschienen 10 sind oberhalb von Greifvorrichtung 20 und Klemmvorrichtung 40 angeordnet. Die Greifvorrichtung 20 enthält mehrere über die Breite der Folie 2 verteilte Greifzangen 24 welche durch nicht dargestellte Pneumatikzylinder geöffnet und geschlossen werden können. Die Höhe der Greifzangen 24 über der Auflage 6 ist in Richtung des Doppelpfeiles C veränderbar. Die Greifzangen 24 sind über eine Linearführung 26 an einem Rahmen 27 angebracht, an welchem auch die Rollen 22 der Greifvorrichtung 20 angebracht sind. An wenigstens einer der Greifzangen 24 ist ein Sensor 28 zum Detektieren des vorderen Randes 21 der Folie 2 angeordnet, siehe Figur 5.

Die Klemmvorrichtung 40 ist relativ zu der Auflage 6 in Richtung der Pfeile A und B verschiebbar. Während des Ablegens der Glastafel 3 durch den Glastafel-Greifer 12 auf der Auflage 6 befindet sich die Greifvorrichtung 20 in einer Parkposition P20 und die Klemmvorrichtung 40 in einer Parkposition P40, welche in Figur 2 dargestellt sind, und in welchen die Greifvorrichtung 20 und die Klemmvorrichtung 40 den Glastafel-Greifer 12 nicht behindern. Die Parkposition P20 befindet sich unterhalb der Laufschienen 10. Nach dem Ablegen der Glastafel 3 durch den Glastafel-Greifer 12 wird dieser in Figur 2 nach rechts aus dem Bereich der Auflage 6 herausgefahren. Die Klemmvorrichtung 40 wird in Richtung des Pfeiles B in ihre in Figur 1 dargestellte Arbeitsposition W40 in einen Bereich oberhalb einer Außenkante 32 der Glastafel 3 verschoben.

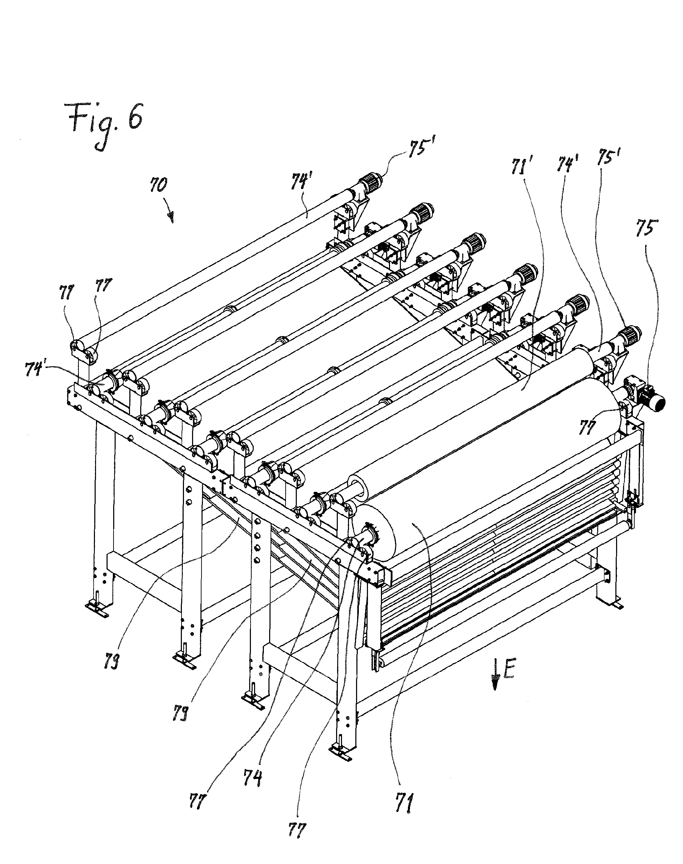

Die Vorrichtung 1 enthält eine Abrolleinrichtung 70 zum Aufnehmen einer Vorratsrolle 71, auf der eine Folienbahn 2a aufgewickelt ist, siehe auch Figur 6. Die auf einer Wickelwelle 74 sitzende Vorratsrolle 71 ist in der Abrolleinrichtung 70 drehbar gelagert und kann von einem Antrieb 75 motorisch gedreht werden. Die Wickelwelle 74 ist an zwei Stellen neben der Vorratsrolle 71 gelagert, wobei jede der Lagerungen zwei frei drehbare Stützrollen 77 enthält. Die Abrolleinrichtung 70 kann mehrere parallel angeordnete Vorratsrollen 71, 71' aufnehmen. Jede der Vorratsrollen 71, 71' sitzt auf einer eigenen Wickelwelle 74, 74'. Für jede Vorratsrolle 71, 71' ist ein eigener Antrieb 75, 75' enthalten, welcher mit der jeweiligen Wickelwelle 74, 74' koppelbar ist und die entsprechende Vorratsrolle 71, 71' in beide Drehrichtungen antreiben kann. Die Wickelwellen 74, 74' sind in zwei parallelen Ebenen versetzt zueinander angeordnet, um Bauraum einzusparen. Alle in der Vorrichtung 1 verwendeten Antriebsmotoren sind steuerbar und können bevorzugt Servomotoren sein. Da der Antrieb der Vorratsrolle 71 über die Wickelwelle 74 erfolgt und der aktuelle Durchmesser der Vorratsrolle 71 variiert, enthält die Abrolleinrichtung 70 zur Bestimmung der Länge der abgewickelten Folie 2 ein Messrad 72, welches auf die Folie 2 aufgesetzt werden kann, an einem schwenkbaren Arm 73 gelagert ist und von einem nicht dargestellten Pneumatikzylinder in Richtung des Pfeiles D an die Vorratsrolle 71 angedrückt wird. Die Folie 2 wird durch Drehen der Vorratsrolle 71 in Laufrichtung E abgewickelt. Bei kleiner werdender Vorratsrolle wird der Arm 73 in Richtung des Pfeiles D geschwenkt, so dass das Messrad 72 stets die oberste Lage der Folie 2 auf der Vorratsrolle 71 berührt. Das Messrad 72 wird von der sich bewegenden Folie 2 mitgedreht. Die Drehbewegung des Messrades 72 wird über Sensoren erfasst, so dass in einer Steuerung der Vorrichtung 1 die Länge der abgewickelten Folie 2 aus der Drehbewegung und dem bekannten Umfang des Messrades 72 errechnet werden kann. Beim Abrollen der Folie 2 von der Vorratsrolle 71 wird der ungefasste vordere Rand 21 der Folie 2 zunächst automatisch aufgrund der auf ihn wirkenden Schwerkraft durch einen Schacht 76 geführt. Der vordere Rand 21 der Folie 2 der Vorratsrolle 71 kann freihängend unmittelbar in den Schacht 76 hineinrutschen. Um jeweils den vorderen Rand der auf den anderen Vorratsrollen 71' aufgewickelten Folie in den Schacht 76 zu führen, sind schräge Leitbleche 79 in der Abrolleinrichtung 70 vorgesehen, auf welchen der vordere Rand der Folie jeweils aufgrund der auf ihn wirkenden Schwerkraft entlang rutschen und in den Schacht 76 hineingleiten kann. Dies hat den Vorteil, dass die Abrolleinrichtung 70 oberhalb der Ebene der Laufschienen 10 angeordnet ist, wo für die Abrolleinrichtung 70 genügend Platz vorhanden ist. Das Messrad 72 kann alternativ auch im Schacht 76 angeordnet sein und dort auf der Folienbahn 2a laufen. Anschließend kann die Folie 2 an Ionisierungsstäben 78 vorbeigeführt werden, welche sich über die Folienbreite erstrecken. Der vordere Rand 21 der Folie 2 wird anschließend automatisch aufgrund der auf ihn wirkenden Schwerkraft durch ein unten noch näher beschriebenes Walzenpaar 80 hindurchgeführt. Die Folie 2 wird durch voneinander beabstandete Walzen 90, 91 und an einer Umlenkwalze 92 vorbei geführt, indem der vordere Rand 21 der Folie 2 weiter durch die Vorrichtung 1 nach unten gleitet. Über eine Leiteinrichtung 94, welche unterhalb des Walzenpaares 80 und in Bezug zur Auflage 6 schräg angeordnet ist, gelangt der vordere Rand 21 der Folie 2 durch die geöffnete Klemmvorrichtung 40 hindurch zu der Greifvorrichtung 20. Der vordere Rand 21 der Folie 2 ist auf seinem Weg aus dem Schacht 76 bis zu der Greifvorrichtung 20 nicht gefasst und rutscht im Wesentlichen frei hängend - getrieben durch die auf ihn wirkende Schwerkraft - durch die Vorrichtung 1. Ein manuelles Einführen des vorderen Randes ist nicht erforderlich. Optional können nach Bedarf zwischen der Abrolleinrichtung 70 und dem Walzenpaar 80 weitere, nicht dargestellte Umlenkwalzen angeordnet sein. In dem Bereich, in welchem die Folienbahn 2a durch das Walzenpaar 80 hindurchgeführt wird, verläuft die Folienbahn 2a jedoch in einer Ebene, das heißt, die Folienbahn 2a verläuft ungekrümmt durch das Walzenpaar 80 und wird auch nicht durch das Walzenpaar 80 umgelenkt oder aus dieser Ebene ausgelenkt.

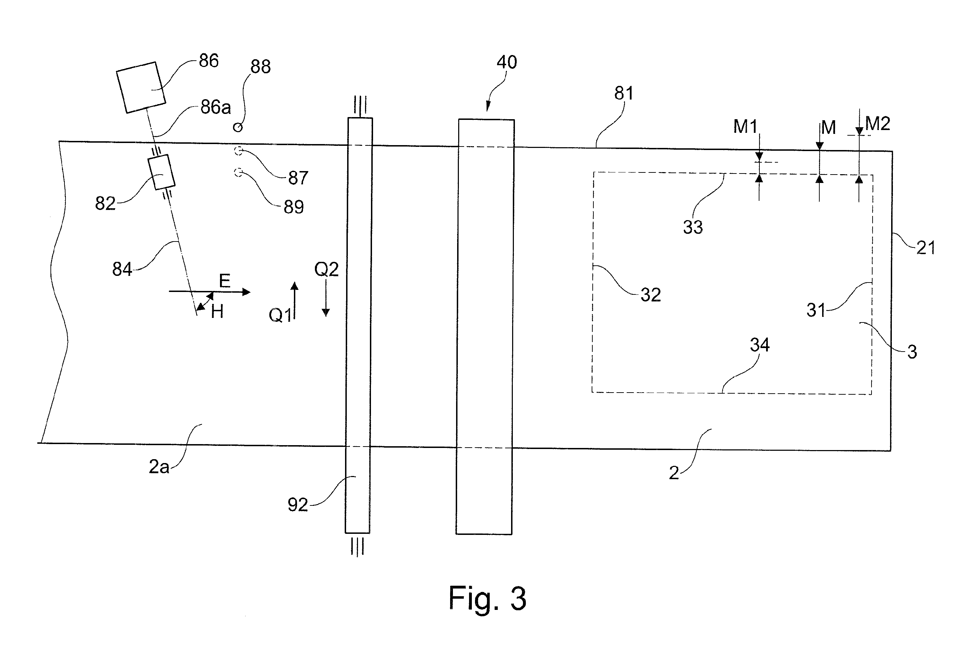

Die in den Figuren 1 und 2 schematisch dargestellte Klemmvorrichtung 40 erstreckt sich über die gesamte Breite der Folienbahn 2a, siehe Figur 3, und ist im Detail in Figur 5 erkennbar. Die Klemmvorrichtung 40 enthält zwei Klemmleistenpaare 41, 42 zum Einklemmen der Folie 2, welche sich quer zur Laufrichtung E jeweils über die gesamte Breite der Folie 2 erstrecken. Das Klemmleistenpaar 41 enthält zwei Klemmleisten 43, 45. Das Klemmleistenpaar 42 enthält zwei Klemmleisten 44, 46. Die Klemmleisten 43, 44, 45, 46 erstrecken sich jeweils quer zur Laufrichtung E über die gesamte Breite der Folie 2. Die oberen Klemmleisten 45, 46 sind an einem Träger 47 befestigt, welcher beweglich in der Klemmvorrichtung 40 angeordnet ist. Der Träger 47 ist mit einem Pneumatikzylinder 48 verbunden, von welchem der Träger 47 mit den Klemmleisten 45, 46 in Richtung des Pfeiles F auf die Klemmleisten 43, 44 zubewegt werden kann. In Figur 5 ist der geöffnete Zustand der Klemmvorrichtung 40 dargestellt. Im geschlossenen Zustand der Klemmvorrichtung 40 berührt die Klemmleiste 45 die Klemmleiste 43 und die Klemmleiste 46 die Klemmleiste 44, so dass die durch die Klemmvorrichtung 40 hindurchgeführte Folie 2 sowohl von dem Klemmleistenpaar 41 als auch von dem Klemmleistenpaar 42 quer zur Laufrichtung E über die gesamte Breite eingeklemmt wird.

An dem Träger 47 ist eine Schneideinrichtung 50 angeordnet, welche quer zur Laufrichtung E entlang des Trägers 47 bewegbar ist. Die Schneideinrichtung 50 enthält ein Messer 52, welches im geschlossenen Zustand der Klemmvorrichtung 40 bis in den Bereich zwischen den beiden Klemmleisten 43 und 44 hineinragt und so die zwischen den Klemmleisten 43, 45 und 44, 46 geklemmte Folie durchtrennt, wenn die Schneideinrichtung 50 quer zur Laufrichtung E bewegt wird. An der der Auflage 6 zugewandten Seite der Klemmvorrichtung 40 ist eine Führungswalze 49 frei drehbar gelagert, siehe Figuren 1 und 2. In Figur 5 ist ferner die Leiteinrichtung 94 erkennbar, welche entlang des Pfeiles G ein in die geöffnete Klemmvorrichtung 40 schiebbar ist. In der Darstellung der Figur 5 ist die Leiteinrichtung 94 mit ihrem Leitblech 96 bereits teilweise in die geöffnete Klemmvorrichtung 40 eingeschoben, um den vorderen Rand 21 der Folie 2 durch die geöffnete Klemmvorrichtung 40 hindurchzuleiten. In Figur 5 ist ferner die in Laufrichtung E hinter der geöffneten Klemmvorrichtung 40 positionierte Greifvorrichtung 20 mit geöffneten Greifzangen 24 schematisch angedeutet. Wenn der vordere Rand 21 der in Figur 5 nicht dargestellten Folie 2 den Sensor 28 erreicht, wird die Greifvorrichtung 20 geschlossen und die Greifzangen 24 greifen den vorderen Rand 21.

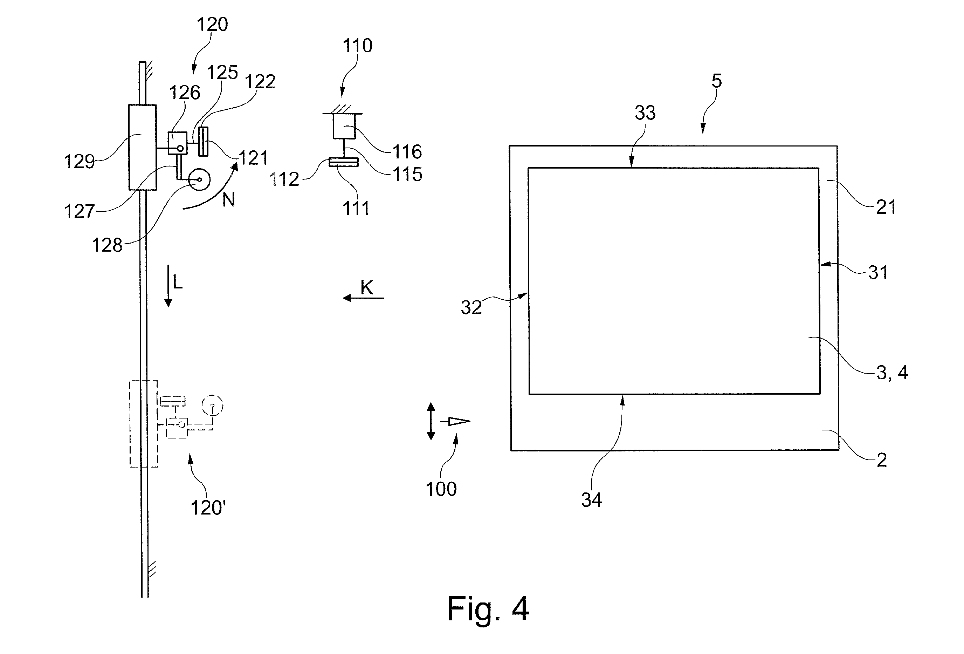

Die Folie 2 soll so auf die Glastafel 3 abgelegt werden, dass die Folie 2 die Glastafel 3 an allen Außenkanten 31, 32, 33, 34 der Glastafel 3 überragt, siehe insbesondere Figuren 3 und 4. Die Breite der Folie 2 wird anhand der Breite der Glastafel 3 ausgewählt. Die Abrolleinrichtung 70 enthält mehrere Vorratsrollen 71, 71', auf welchen Folienbahnen 2a unterschiedlicher Breite aufgewickelt sind. Nach dem Ablegen der Glastafel 3 auf der Auflage 6 kann die Breite der Glastafel 3 durch eine nicht dargestellte Messeinrichtung gemessen werden. Anhand der gemessenen Breite der Glastafel 3 wird eine passende Vorratsrolle 71, 71' ausgewählt. Die Folie 2 soll so auf der Glastafel 3 abgelegt werden, dass ein seitlicher Rand 81 der Folie 2 einen Abstand M senkrecht zu einer Außenkante 33 der Glastafel 3 aufweist, welcher zwischen einer ersten Maximalposition M1 und einer zweiten Maximalposition M2 liegt, siehe Figur 3. Die Maximalposition M1 wird so gewählt, dass der seitliche Rand 81 der Folie 2 nach dem Ablegen auf der Glastafel 3 einen geringsten zulässigen Überstand über die Außenkanten 33 aufweist. Die Maximalposition M2 wird so definiert, dass der seitliche Rand 81 einen höchsten zulässigen Überstand über die Außenkante 33 aufweist. M1 beträgt bevorzugt 20 mm oder mehr, M2 beträgt bevorzugt 40 mm oder weniger. Die Folie 2 ist somit der Glastafel 3 so zuzuführen, dass der seitliche Rand 81 ständig zwischen den beiden Maximalpositionen M1 und M2 liegt.

Der Abstand der Vorratsrolle 71 zu der Glastafel 3 kann aufgrund der Größe der Vorrichtung 1 mehrere Meter betragen und beispielsweise zwischen 5 Meter und 10 Meter liegen. Damit der seitliche Rand 81 die Glastafel 3 in einer Position M zwischen den beiden Maximalpositionen M1 und M2 erreicht, wird die Position M des seitlichen Randes 81 während des Zuführens der Folie 2, und zwar insbesondere bereits während des Zuführens des vorderen Randes 21 der Folie 2 bis zur Greifvorrichtung 20, geregelt. Hierzu dient das Walzenpaar 80, durch welches der seitliche Randbereich 81 der Folienbahn 2a hindurchgeführt wird. Das Walzenpaar 80 enthält eine erste Walze 82, welche frei drehbar gelagert und von der zweiten Walze 83 des Walzenpaares 80 abgehoben werden kann. Die zweite Walze 83 ist mit einem in den Figuren 1 und 3 angedeuteten Antrieb 86 zum Rotieren der Walze 83 über eine Antriebswelle 86a gekoppelt, wobei die Walze 83 in Figur 3 nicht sichtbar ist, da sie genau hinter der Walze 82 liegt. Die Walze 83 ist über einen nicht dargestellten Freilauf mit der Antriebswelle 86a gekoppelt, welcher eine Drehzahl der Walze 83 erlaubt, die höher als die vom Antrieb 86 vorgegebene Drehzahl ist. Der Freilauf bildet eine nur in einer Drehrichtung drehfeste Verbindung zwischen dem Antrieb 86 und der Walze 83. Die Walze 82 kann durch die Anpresseinrichtung 85 gegen die zweite Walze 83 des Walzenpaares 80 gepresst werden. Die Anpresseinrichtung 85 kann durch einen Pneumatikzylinder gebildet werden und ist so steuerbar, so dass die Anpresskraft, mit welcher die beiden Walzen 82, 83 gegeneinander gepresst werden, verändert werden kann. Die Walze 82 kann durch die Anpresseinrichtung 85 außerdem von der zweiten Walze 83 abgehoben werden, um den vorderen Rand 21 der Folienbahn 2a leichter durch das Walzenpaar 80 hindurchführen zu können. Die Drehachsen 84 der Walzen 82 und 83 sind parallel zueinander, parallel zur Folienbahn 2a und in einem Winkel H, siehe Figur 3, schräg zur Laufrichtung E der Folienbahn 2a orientiert. Der Winkel H liegt etwa im Bereich von 70° bis 80°. Die Walzen 82, 83 können eine Breite von etwa 50 mm bis 100 mm und einen Durchmesser von etwa 50 mm bis 100 mm haben. Jede der Walzen 82, 83 weist einen Bezug aus einem gummielastischen Material auf, damit die Folienbahn 2a nicht beschädigt wird.

Dem Walzenpaar 80 sind zur Regelung der Position M des seitlichen Randes 81 der Folie 2 drei Sensoren 87, 88, 89 zugeordnet, siehe Figur 3. Der erste Sensor 87 ist derart bezüglich des seitlichen Randes 81 der Folienbahn 2a angeordnet, dass er die erste Maximalposition M1 definiert. Der zweite Sensor 88 ist quer zur Laufrichtung E beabstandet zu dem ersten Sensor 87 angeordnet und definiert die zweite Maximalposition M2. Jeder der Sensoren 87, 88, 89 liefert ein Signal, wenn sich seine Überdeckung durch die Folienbahn 2a ändert. Der in der Position M zwischen den Maximalpositionen M1 und M2 liegende seitliche Rand 81 der Folienbahn 2a überdeckt den ersten Sensor 87, während der zweite Sensor 88 von dem seitlichen Rand 81 der Folienbahn 2a nicht überdeckt wird. Der seitliche Rand 81 liegt somit zwischen den beiden Sensoren 87, 88. Der dritte Sensor 89 ist vorgesehen, damit das Vorhandensein einer Folienbahn 2a auch dann erkannt wird, wenn weder der erste Sensor 87 noch der zweite Sensor 88 von dem seitlichen Rand 81 überdeckt wird. Durch die in dem Winkel H schräg zur Laufrichtung E gerichteten Drehachsen 84 der Walzen 82, 83 wird der seitliche Rand 81 der Folie 2 in eine erste Querrichtung Q1 gezogen, wenn die Anpresseinrichtung 85 mit Druck beaufschlagt und dadurch die Anpresskraft der Walze 82 gegen die Walze 83 erhöht wird. Während der Bewegung der Folienbahn 2a in Laufrichtung E wird dadurch erreicht, dass der seitliche Rand 81 in Querrichtung Q1 wandert. Wird die Anpresskraft der Walze 82 verringert, beispielsweise indem die Anpresseinrichtung 85 drucklos geschaltet wird, wird die Wanderbewegung in Querrichtung Q1 beendet. Die Folienbahn 2a wird nach der Vorratsrolle 71 so geführt, dass der seitliche Rand 81 der Folie 2 in Querrichtung Q2 wandert, wenn die Anpresskraft der Walzen 82, 83 verringert wird. Durch eine definierte geringfügige Schrägstellung der Wickelwelle 74, der Umlenkwalze 92 oder weiterer nicht dargestellter Umlenkwalzen, kann die Folienbahn 2a so geführt werden, dass der seitliche Rand 81 eine Wanderbewegung in Querrichtung Q2 ausführt, wenn die Walze 82 nicht oder nur mit einer sehr geringen Anpresskraft gegen die Walze 83 gedrückt wird, zum Beispiel weil die Anpresseinrichtung 85 drucklos geschaltet ist. Mit dem Walzenpaar 80, der Anpresseinrichtung 85 und den Sensoren 87, 88 wird eine Zweipunktregelung für die Position M des seitlichen Randes 81 in Bezug auf die Außenkante 33 der Glastafel 3 durchgeführt.

Bei dem automatischen Verfahren zum Zuführen und Ablegen der Folie 2 wird zunächst die Glastafel 3 auf die Auflage 6 gelegt. Die Glastafel 3 wird während des Zuführens und Ablegens der Folie 2 auf der Auflage 6 nicht mehr bewegt. Anschließend wird die Klemmvorrichtung 40 aus ihrer Parkposition P40, siehe Figur 2, in Richtung des Pfeiles B in ihre in Figur 1 dargestellte Arbeitsposition W40 oberhalb der Außenkante 32 der Glastafel 3 gefahren. Das Leitblech 96 der Leiteinrichtung 94 wird in Richtung G in die geöffnete Klemmvorrichtung 40 eingeschoben, siehe Figur 5. In Abwandlung zu der in Figur 5 dargestellten Position der Leiteinrichtung 94 kann das Leitblech 96 auch noch weiter in Richtung G durch die Klemmvorrichtung 40 hindurchgeschoben werden, so dass der Abstand von dem Leitblech 96 zu den Greifzangen 24 minimiert wird. Die Greifvorrichtung 20 wird aus ihrer Parkposition, siehe Figur 2, in Laufrichtung E hinter die in ihrer Arbeitsposition stehende Klemmvorrichtung 40 gefahren, so dass das Leitblech 96 der Leiteinrichtung 94 in die geöffneten Greifzangen 24 der Greifvorrichtung 20 gerichtet ist, siehe Figur 5.

Die Folie 2 wird von der Vorratsrolle 71 abgerollt, indem die Vorratsrolle 71 über den Antrieb 75 und die Wickelwelle 74 motorisch gedreht wird. Dabei wird die Länge der abgerollten Folie 2 durch das Messrad 72 gemessen. Der sich von der Vorratsrolle 71 in Laufrichtung E bewegende vordere Rand 21 der Folie 2 rutscht aufgrund der Schwerkraft durch den Schacht 76 und das Walzenpaar 80 hindurch. Bevor der vordere Rand 21 das Walzenpaar 80 erreicht, wird die Walze 82 von der Walze 83 abgehoben und die Walze 83 wird durch den Antrieb 86 in Rotation versetzt, wobei die Umfangsgeschwindigkeit der motorisch gedrehten Walze 83 der Bewegungsgeschwindigkeit der Folienbahn 2a in Laufrichtung E entspricht. Nachdem der vordere Rand 21 das Walzenpaar 80 passiert hat, wird die Walze 82 wieder auf die Walze 83 und die zwischen ihnen liegende Folienbahn 2a aufgesetzt.

Wenn der vordere Rand 21 den Sensor 89 passiert hat, wird die Position M des seitlichen Randes 81 der Folie 2 durch die Zweipunktregelung geregelt. Dies wird insbesondere durch das motorische Drehen der Walze 83 ermöglicht, da der vordere Rand 21 die Greifvorrichtung 20 noch nicht erreicht hat und noch frei in der Vorrichtung 1 hängt. Stellt der Sensor 87 fest, dass der seitliche Rand 81 den Sensor 87 nicht überdeckt, so wird durch Versorgen der Anpresseinrichtung 85 mit Druckluft die Anpresskraft auf einen hohen Wert geschaltet, so dass die Folienbahn 2a in Querrichtung Q1 wandert. Dies kann unmittelbar der Fall sein, wenn der Sensor 89 den vorderen Rand 21 der Folie 2 erkannt hat, sich der seitliche Rand 81 jedoch zwischen den Sensoren 89 und 87 befindet. Es kann auch sein, dass sich der seitliche Rand 81 der Folienbahn 2a zunächst in der in Figur 3 dargestellten Position zwischen den beiden Sensoren 87 und 88 oder sogar über dem Sensor 88 befindet. Der Sensor 87 erkennt dann gleichzeitig mit dem Sensor 89 den vorderen Rand 21 der Folienbahn und die Anpresskraft wird zunächst nicht auf einem hohen Wert geschaltet, so dass das Walzenpaar 80 noch keine Zugkraft in Querrichtung Q1 ausübt. Durch die entsprechende Einstellung beispielsweise der Wickelwelle 74 oder später auch der Umlenkwalze 92 wandert der seitliche Rand 81 nun langsam in Querrichtung Q2, wenn die Folienbahn 2a weiter in Laufrichtung E durch die Vorrichtung 1 geführt wird. Nach einiger Zeit ist der seitliche Rand 81 über den Sensor 87 in Richtung Q2 hinausgewandert. Von dem Sensor 87 wird erkannt, dass der seitliche Rand 81 den Sensor 87 nicht mehr überdeckt und seine Maximalposition M1 erreicht hat. Jetzt wird der Anpresseinrichtung 85 ein Signal gegeben und die Walze 82 mit hoher Anpresskraft gegen die Walze 83 und die dazwischenliegende Folienbahn 2a angepresst, so dass das Walzenpaar 80 durch die angetriebene Walze 83 und seine im Winkel H schräggestellten Drehachsen 84 eine Zugkraft in Querrichtung Q1 auf den seitlichen Rand 81 der Folienbahn 2a ausübt. Während der weiteren Bewegung der Folienbahn 2a in Laufrichtung E wandert dabei nun der seitliche Rand 81 in Querrichtung Q1. Erreicht der seitliche Rand 81 seine Maximalposition M2 bzw. den zweiten Sensor 88, so dass dieser von der Folienbahn 2a überdeckt wird, gibt dieser ein Signal an die Anpresseinrichtung 85 und die von ihr ausgeübte Anpresskraft wird auf einen niedrigen Wert verringert. Bevorzugt wird die Anpresseinrichtung 85 hierzu drucklos geschaltet. Es wird dann keine Zugkraft mehr von dem Walzenpaar 80 in Richtung Q1 auf die Folienbahn 2a ausgeübt, so dass diese langsam wieder in Querrichtung Q2 wandert. Sobald der Rand 21 der Folienbahn 2a den ersten Sensor 87 erreicht und sich dort die Überdeckung ändert, wird die Anpresskraft der Walze 82 wieder erhöht. Diese Zweipunktregelung wird während des gesamten weiteren Zuführens der Folie 2 zu der Glastafel 3 ausgeführt.

Der durch das Walzenpaar 80 hindurchgeführte vordere Rand 21 der Folie 2 wird nach dem Walzenpaar 80 weiter automatisch aufgrund der auf ihn wirkenden Schwerkraft zwischen Walzen 90, 91 hindurch und an der Umlenkwalze 92 vorbei geführt. Anschließend wird die Folie mittels der Leiteinrichtung 94 durch die geöffnete Klemmvorrichtung 40 bis in die geöffnete Greifvorrichtung 20 geführt und zwar indem der vordere Rand 21 über die Leiteinrichtung 94 rutscht, siehe auch Figur 5. Erkennt der Sensor 28, dass sich der vordere Rand 21 der Folie 2 in den Greifzangen 24 befindet, werden die Greifzangen 24 geschlossen. Das automatische Einfädeln des ungefassten vorderen Randes 21 der Folie 2 aufgrund der Schwerkraft ist nun beendet. Aufgrund der durchgeführten Regelung der Position des seitlichen Randes 81 liegt dieser beim Greifen des vorderen Randes 21 präzise in seiner gewünschten Position und die Genauigkeit beim nachfolgenden Ablegen der Folie 2 auf der Glastafel 3 wird erhöht.

Wenn der vordere Rand 21 der Folie 2 durch die Greifvorrichtung 20 gegriffen wurde, wird die Leiteinrichtung 94 entgegen der Richtung G wieder aus der geöffneten Klemmvorrichtung 40 herausgefahren. Die geschlossene Greifvorrichtung 20 mit dem darin gehaltenen vorderen Rand 21 der Folie 2 wird in Laufrichtung E von der geöffneten Klemmvorrichtung 40 wegbewegt. Die Greifvorrichtung 20 wird in einem Abstand oberhalb der Auflage 6 beziehungsweise der Glastafel 3 in Laufrichtung E bewegt, siehe Figur 1. Dadurch wird die Folie 2 über die Glastafel 3 hinweggeführt, ohne dass die Folie 2 die Glastafel 3 berührt. Die Bewegungsgeschwindigkeit der Greifvorrichtung 20 in Laufrichtung E ist auf die Bewegungsgeschwindigkeit der Folienbahn 2a in Laufrichtung E abgestimmt, so dass die Folie 2 zwischen der Klemmvorrichtung 40 beziehungsweise der Führungswalze 49 und der Greifvorrichtung 20 höchstens soweit durchhängt, dass der tiefste Punkt der durchhängenden Folie 2 die Glastafel 3 noch nicht berührt. Dies ist wichtig, damit eine eventuell auf der Glastafel 3 vorhandene empfindliche Oberflächenbeschichtung nicht durch die sich in Laufrichtung E bewegende Folie 2 beschädigt wird. Um eine Berührung der Folie 2 mit der Glastafel 3 zu verhindern, kann die Höhe der Greifzangen 24 über der Auflage 6 während der Bewegung der Greifvorrichtung in Laufrichtung E verändert werden, siehe Verschieberichtung C.

Nachdem eine entsprechend der Länge der Glastafel 3 gewählte Länge der Folienbahn 2a abgerollt wurde und die Greifvorrichtung 20 ihre Endposition oberhalb der Außenkante 31 der Glastafel 3 erreicht hat, wird das Drehen der Vorratsrolle 71 und die Bewegung der Greifvorrichtung 20 gestoppt. Nun wird die Klemmvorrichtung 40 in Richtung F geschlossen und die Folie 2 wird von den Klemmleistenpaaren 41, 42 eingeklemmt. Das vordere Ende 21 der Folie 2 wird durch Öffnen der Greifzangen 24 auf der Glastafel 3 abgelegt. Gegebenenfalls kann die Höhe der Greifzangen 24 über der Auflage 6 vor dem Öffnen der Greifzangen 24 verringert werden. Die Folie 2 wird von dem aus der Folienbahn 2a und der Vorratsrolle 71 gebildeten Vorrat durch die Schneideinrichtung 50 entlang der Klemmvorrichtung 40 abgeschnitten. Anschließend wird die Klemmvorrichtung 40 durch Abheben der Klemmleisten 45 und 46 von den Klemmleisten 43 und 44 entgegen der Pfeilrichtung F geöffnet. Das in dem Klemmleistenpaar 42 geklemmte Ende der Folie 2 rutscht beim Öffnen von selbst aus der Klemmvorrichtung 40 heraus und legt sich auf die Glastafel 3 ab. Die Folie 2 befindet sich nun in der in Figur 2 dargestellten Lage auf der Glastafel 3, wobei die Folie 2 wie in Figur 4 dargestellt, alle Außenkanten 31, 32, 33, 34 der Glastafel 3 überragt und an der Außenkante 33 aufgrund des durchgeführten Regelungsverfahrens eine Position M aufweist, welche zwischen den beiden Maximalpositionen M1 und M2 liegt.

Im Anschluss an das Ablegen der Folie 2 wird die Vorratsrolle 71 über die Wickelwelle 74 motorisch entgegen der Abrollrichtung gedreht, so dass die Folienbahn 2a entgegen der Laufrichtung E aus der Klemmvorrichtung 40 gezogen und wieder auf die Vorratsrolle 71 aufgewickelt wird. Dabei kann der nach dem Abschneiden gebildete neue vordere Rand bis zu einer Referenzposition, beispielsweise in dem Schacht 76 oder in der Abrolleinrichtung 70, zurückgezogen werden, um für einen späteren Ablegevorgang bereitzustehen. Die Klemmvorrichtung 40 wird in Richtung A in ihre in Figur 2 dargestellte Parkposition P40 zurückgefahren. Die Greifvorrichtung 20 wird ebenfalls in ihre in Figur 2 dargestellte Parkposition P20 zurückgefahren. Nun wird mit dem Glastafel-Greifer 12 die Glastafel 4 auf die Folie 2 abgelegt. Anschließend wird das Glastafelpaket aus den beiden Glastafeln 3, 4 mit der dazwischen liegenden Folie 2 durch motorisches Drehen der Rollen 8 in Transportrichtung K von der Auflage 6 wegbefördert und zu Schneidvorrichtungen 100, 110 und 120 zum automatischen Abschneiden der über die Außenkanten 31, 32, 33, 34 der Glastafel 3 herausragenden Folie 2 transportiert, siehe Figuren 1 und 4. Wenn die Folie 2 sehr weit über die Außenkante 34 herausragt, wird bevorzugt durch eine Schneidvorrichtung 100 zunächst ein "Grobschnitt" durchgeführt, bei dem die Folie 2 in einem Abstand von etwa 40 mm zur Außenkante 34 abgeschnitten wird. Weil mit der Schneidvorrichtung 100 lediglich ein Grobschnitt in einem relativ großen Abstand zur Außenkante 34 ausgeführt wird, werden an die Ausgestaltung der Schneidvorrichtung 100 keine besonderen Anforderungen gestellt. Die Schneidvorrichtung 100 kann in an sich bekannter Weise oder analog der Schneidvorrichtungen 110 oder 120 ausgebildet sein. Der Grobschnitt mit der Schneidvorrichtung 100 erleichtert das exakte Abscheiden der über die Außenkante 34 herausragenden Folie 2 in der unten noch näher beschriebenen Schneidvorrichtung 120, da dann von der Schneidvorrichtung 120 nur noch ein schmaler Folienstreifen abgeschnitten werden muss, welcher sich an der Schneidvorrichtung 120 insbesondere leichter entsorgen lässt.

Das Glastafelpaket 5 wird mit der Außenkante 33 an einer ortsfest angeordneten Schneidvorrichtung 110 vorbeigeführt. Die Schneidvorrichtung 110 enthält ein scheibenförmiges Untermesser 111 und ein scheibenförmiges Obermesser 112. Jedes der Messer 111, 112 hat eine entlang seines äußeren Umfangs umlaufende Schneide 113, 114 und ist drehbar um eine Drehachse gelagert. Die beiden Messer 111, 112 sind so zueinander angeordnet, dass die beiden Schneiden 113, 114 sich zumindest an einem Punkt berühren. Das Obermesser 112 ist drehfest mit einer Antriebswelle 115 verbunden, welche von einem Motor 116 antreibbar ist. Der Motor 116 kann das Obermesser 112 in eine Rotation um dessen Drehachse versetzen. Das Untermesser 111 ist frei drehbar gelagert. Wie in Figur 1 erkennbar ist, überdecken sich die Flanken der beiden Messer 111 und 112 abschnittsweise, um ein scherenartiges aneinander Entlanggleiten der Schneiden 113, 114 zum Durchtrennen der Folie 2 zu ermöglichen. Die Schneide 114 hat entlang ihrer Drehachse gesehen eine von der Kreisform abweichende Form, beispielsweise die Form eines Sechsecks. Die Schneide 113 ist entlang ihrer Drehachse gesehen kreisförmig. Mit der Schneidvorrichtung 110 kann die Folie 2 sehr exakt und mit hoher Schnittqualität in einem gleichmäßigen Abstand zu der Außenkante 33 abgeschnitten werden.

In Transportrichtung K nach der Schneidvorrichtung 110 ist eine weitere Schneidvorrichtung 120 angeordnet, mit welcher die Folie 2 an den Außenkanten 32, 34 und 31 abgeschnitten wird. Die Schneidvorrichtung 120 enthält in gleicher Weise wie die Schneidvorrichtung 110 ein scheibenförmiges Untermesser 121 und ein scheibenförmiges Obermesser 122 mit Schneiden 123, 124, wobei die Schneide 113 kreisförmig ist und die Schneide 124, wie die Schneide 114, die Form eines Vielecks aufweist. Das Untermesser 121 ist frei drehbar gelagert und das Obermesser 122 ist über eine Antriebswelle 125 von einem Motor 126 antreibbar. An einem Träger 127 der Schneidvorrichtung 120 ist zumindest eine drehbar gelagerte Führungsrolle 128 zum Anlegen an eine Außenkante 32 der Glastafel 3 angeordnet. Der Träger 127 ist schwenkbar an einer Linearführung 129 befestigt, welche sich quer zur Transportrichtung K erstreckt und mittels welcher die Schneidvorrichtung 120 in Richtung des Pfeiles L entlang der Außenkante 32 verschoben werden kann.

Das Glastafelpaket 5 wird so weit in Transportrichtung K bewegt, bis die Außenkante 32 an der Führungsrolle 128 anliegt. Das Glastafelpaket 5 wird in dieser Position angehalten. Nun wird die Schneidvorrichtung 120 in Richtung L an der Außenkante 32 entlang geführt und die über die Außenkante 32 herausragende Folie 2 von den Messern 121 und 122 abgeschnitten. Die Führungsrolle 128 gewährleistet, dass die Messer 121 und 122 keine der Glastafeln 3, 4 berühren. Anschließend wird die Schneidvorrichtung 120 um 90° in Pfeilrichtung N in die in Figur 4 gestrichelt dargestellte und mit dem Bezugszeichen 120' bezeichnete Position verschwenkt. Die Führungsrolle 128 wird dann an die Außenkante 34 angelegt und das Glastafelpaket 5 wird in Transportrichtung K an der in der Position 120' verbleibenden Schneidvorrichtung 120 vorbeigeführt. Dabei wird die über die Außenkante 34 herausragende Folie 2 abgeschnitten. Anschließend wird die Schneidvorrichtung 120 noch einmal um 90° in Richtung N weitergeschwenkt, so dass durch ein Zurückfahren der Schneidvorrichtung 120 entlang der Linearführung 129 entgegen der Pfeilrichtung L die über die Außenkante 31 herausragende Folie 2 abgeschnitten werden kann. Die Vorrichtung 120 wird schließlich um 180° in ihre Ausgangslage zurückgeschwenkt.

Alternativ zu dem vorbeschriebenen automatischen Besäumvorgang mit den Schneidvorrichtungen 100, 110, 120 ist die Vorrichtung 1 auch für ein manuelles Besäumen gut geeignet. Ein manuelles Besäumen, bei welchem die über die Außenkanten 31, 32, 33, 34 der Glastafel 3 herausragende Folie 2 von einer Bedienperson mittels eines von Hand geführten Messers abgeschnitten wird, ist insbesondere vorteilhaft, wenn sogenannte "Modellscheiben" hergestellt werden, bei welchen die Glastafeln 3, 4 nicht rechteckig sondern beispielsweise dreieckig oder abgerundet sind. Auch zum manuellen Besäumen ermöglichen die Freiräume 64 in der Auflage 6 einen guten Zugang der Bedienperson zu dem Glastafelpaket 5. Die Zugänglichkeit für die Bedienperson wird weiter dadurch verbessert, dass der Träger 62 in Richtung R verschiebbar ist und die Breite der Auflage quer zur Transportrichtung K an die Breite der Glastafeln 3, 4 bzw. des herzustellenden Glastafelpakets 5 angepasst werden kann. Die Position des Trägers 62 wird dabei durch einen Antrieb so in Richtung R verschoben, dass die gesamte Breite der durch die Rollen 8 gebildeten Auflage die Breite der Glastafel 3 nur geringfügig übersteigt. Die Bedienperson kann dadurch ungehindert in Richtung K entlang der Außenkanten 33, 34 der Glastafel 3 laufen.

Danach wird das Glastafelpaket 5 durch motorisches Rotieren der Rollen 8 in Transportrichtung K einer nicht dargestellten Heiz- und Pressvorrichtung zugeführt.

**Bezugszeichenliste**

| | | | |
|---|---|---|---|
| 1 | Vorrichtung | 50 | Schneideinrichtung |
| 2 | Folie | 52 | Messer |
| 2a | Folienbahn | 60 | Welle |
| 3 | Glastafel | 61 | Träger |
| 4 | Glastafel | 62 | Träger |
| 5 | Glastafelpaket | 63 | Grundgestell |
| 6 | Auflage | 64 | Freiraum |
| 8 | Rollen | 70 | Abrolleinrichtung |
| 10 | Laufschienen | 71, 71' | Vorratsrolle |
| 12 | Glastafel-Greifer | 72 | Messrad |
| 14 | Rollen | 73 | schwenkbarer Arm |
| 16 | Saugeinrichtungen | 74, 74' | Wickelwelle |
| 20 | Greifvorrichtung | 75, 75' | Antrieb |
| 21 | vorderer Rand | 76 | Schacht |
| 24 | Greifzangen | 77 | Stützrollen |
| 26 | Linearführung | 78 | Ionisierungsstäbe |
| 27 | Rahmen | 79 | Leitbleche |
| 28 | Sensor | 80 | Walzenpaar |
| 31 | Außenkante | 81 | seitlicher Rand |
| 32 | Außenkante | 82 | erste Walze |
| 33 | Außenkante | 83 | zweite Walze |
| 34 | Außenkante | 84 | Drehachsen |
| 40 | Klemmvorrichtung | 85 | Anpresseinrichtung |
| 41 | Klemmleistenpaar | 86 | Antrieb |
| 42 | Klemmleistenpaar | 86a | Antriebswelle |
| 43 | Klemmleiste | 87 | Sensor |
| 44 | Klemmleiste | 88 | Sensor |
| 45 | Klemmleiste | 89 | Sensor |
| 46 | Klemmleiste | 90 | Walze |
| 47 | Träger | 91 | Walze |
| 48 | Pneumatikzylinder | 92 | Umlenkwalze |
| 49 | Führungswalze | 94 | Leiteinrichtung |
| 96 | Leitblech | P20 | Parkposition |
| 100 | Schneidvorrichtung | P40 | Parkposition |
| 110 | Schneidvorrichtung | Q1 | erste Querrichtung |
| 111 | scheibenförmiges Untermesser | Q2 | zweite Querrichtung |
| 112 | scheibenförmiges Obermesser | R | Verschieberichtung |
| 113 | Schneide | W40 | Arbeitsposition |
| 114 | Schneide | | |
| 115 | Antriebswelle | | |
| 116 | Motor | | |
| 120 | Schneidvorrichtung | | |
| 121 | scheibenförmiges Untermesser | | |
| 122 | scheibenförmiges Obermesser | | |
| 123 | Schneide | | |
| 124 | Schneide | | |
| 125 | Antriebswelle | | |
| 126 | Motor | | |
| 127 | Träger | | |
| 128 | Führungsrolle | | |
| 129 | Linearführung | | |
| | | | |
| A | Verschieberichtung | | |
| B | Verschieberichtung | | |
| C | Verschieberichtung | | |
| D | Schwenkrichtung | | |
| E | Laufrichtung | | |
| F | Schließrichtung | | |
| G | Einschieberichtung | | |
| H | Winkel | | |
| K | Transportrichtung | | |
| L | Verschieberichtung | | |
| M | Abstand | | |
| M1 | erste Maximalposition | | |
| M2 | zweite Maximalposition | | |
| N | Schwenkrichtung | | |

## Patentansprüche

1. Verfahren zum automatischen Ablegen einer thermoplastischen Kunststofffolie (2) auf einer liegenden Glastafel (3) bei der Herstellung von Verbundsicherheitsglasscheiben mit folgenden Schritten:
• Abrollen der Folie (2) von einer Vorratsrolle (71) durch motorisches Drehen der Vorratsrolle (71);
• Hindurchführen der Folie (2) durch eine geöffnete Klemmvorrichtung (40);
• Einführen des vorderen Endes der Folie (2) in eine geöffnete Greifvorrichtung (20), die in Laufrichtung (E) hinter der geöffneten Klemmvorrichtung (40) positioniert ist;
• Greifen des vorderen Endes der Folie (2) entlang des vorderen Randes (21) der Folie (2) durch Schließen der Greifvorrichtung (20);
• Wegbewegen der geschlossenen Greifvorrichtung (20) mit dem darin gehaltenen vorderen Rand (21) der Folie (2) von der geöffneten Klemmvorrichtung (40);
• Führen der Folie (2) über die Glastafel (3) hinweg, ohne dass die Folie (2) die Glastafel (3) berührt;
• Stoppen des Drehens der Vorratsrolle (71) und der Bewegung der Greifvorrichtung (20);
• Einklemmen der Folie (2) quer zur Laufrichtung durch Schließen der Klemmvorrichtung (40);
• Ablegen des vorderen Endes (21) der Folie (2) auf der Glastafel (3) durch Öffnen der Greifvorrichtung (20);
• Abschneiden der Folie (2) vom Vorrat (2a, 71) entlang der Klemmvorrichtung (40);
• Öffnen der Klemmvorrichtung (40);
• Aufwickeln der Folienbahn (2a) auf die Vorratsrolle (71) durch motorisches Drehen der Vorratsrolle (71) entgegen der Laufrichtung (E).

2. Verfahren nach Anspruch 1, in welchem die Klemmvorrichtung (40) vor dem Hindurchführen der Folie (2) aus einer Parkposition (P40) in eine Arbeitsposition (W40) oberhalb einer Außenkante 32 der Glastafel (3) gefahren wird.

3. Verfahren nach Anspruch 2, in welchem die geöffnete Greifvorrichtung (20) in Laufrichtung (E) hinter die in ihrer Arbeitsposition (W40) stehende Klemmvorrichtung (40) gefahren wird.

4. Verfahren nach Anspruch 2 oder 3, in welchem die Klemmvorrichtung (40) im Anschluss an ihr Öffnen wieder in ihre Parkposition (P40) zurückgefahren wird.

5. Verfahren nach einem der vorstehenden Ansprüche, in welchem die geschlossene Greifvorrichtung (20) mit dem darin gehaltenen vorderen Rand (21) der Folie (2) über die Glastafel (3) hinwegbewegt wird und dadurch die Folie (2) über die Glastafel (3) hinwegführt.

6. Verfahren nach einem der vorstehenden Ansprüche, in welchem vor dem Hindurchführen der Folie (2) durch die geöffnete Klemmvorrichtung (40) eine Leiteinrichtung (94) in die geöffnete Klemmvorrichtung (40) eingeschoben wird, um den vorderen Rand (21) der Folie (2) durch die geöffnete Klemmvorrichtung (40) hindurch zu leiten, und in welchem die Leiteinrichtung (94) wieder aus der geöffneten Klemmvorrichtung (40) herausgefahren wird, wenn der vordere Rand (21) der Folie (2) durch die Greifvorrichtung (20) gegriffen wurde.

7. Verfahren nach Anspruch 7, in welchem die Leiteinrichtung (94) den vorderen Rand (21) der Folie (2) bis in die geöffnete Greifvorrichtung (20) hinein leitet.

8. Verfahren nach einem der vorstehenden Ansprüche, in welchem die Länge der abgerollten Folie (2), insbesondere durch ein auf die Folie (2) aufgesetztes Messrad (72), gemessen wird und das Drehen der Vorratsrolle (71) nach dem Abrollen einer auf die Länge der Glastafel (3) abgestimmten Länge der Folie (2) gestoppt wird.

9. Verfahren nach einem der vorstehenden Ansprüche, in welchem die Glastafel (3) vor dem Abrollen der Folie (2) auf einer Auflage (6) abgelegt wird und während des Abrollens und Ablegens der Folie (2) nicht bewegt wird.

10. Verfahren nach einem der vorstehenden Ansprüche, in welchem eine weitere Glastafel (4) auf die auf der Glastafel (3) abgelegte Folie (2) gelegt wird, und in welchem die über die Außenkanten (31, 32, 33, 34) der Glastafeln (3, 4) hinausragende Folie (2) automatisch beschnitten wird.

11. Vorrichtung (1) zum automatischen Ablegen einer thermoplastischen Kunststofffolie (2) auf einer liegenden Glastafel (3) bei der Herstellung von Verbundsicherheitsglasscheiben mit folgenden Merkmalen:
• einer Abrolleinrichtung (70) zum Aufnehmen einer Vorratsrolle (71) mit einem Antrieb zum Drehen der Vorratsrolle (71) in und entgegen der Laufrichtung (E) der abgerollten Folie (2);
• einer Auflage (6) für eine Glastafel (3);
• einer über der Auflage (6) in Laufrichtung (E) der abgerollten Folie (2) bewegbaren Greifvorrichtung (20) zum Greifen des vorderen Randes (21) der Folie (2);
• einer in Laufrichtung (E) vor der Auflage (6) angeordneten Klemmvorrichtung (40) zum Hindurchführen der Folie (2) und zum Einklemmen der Folie (2) quer zur Laufrichtung (E) durch Schließen der Klemmvorrichtung (40);
• einer quer zur Laufrichtung (E) bewegbaren Schneideinrichtung (50) zum Abschneiden der auf der Glastafel (3) liegenden Folie (2) vom Vorrat (2a, 71).

12. Vorrichtung nach Anspruch 11, in welcher der Abstand der Greifvorrichtung (20) über der Auflage (6) für die Glastafel (3) veränderbar ist, insbesondere bis über die oberhalb der der Auflage (6) für die Glastafel (3) angeordnete Klemmvorrichtung (40) hinaus.

13. Vorrichtung nach Anspruch 11 oder 12, mit folgenden weiteren Merkmalen:
• parallel zur Auflage (6) für die Glastafel (3) angeordneten Laufschienen (10);
• die Greifvorrichtung (20) ist auf den Laufschienen (10) verfahrbar;
• die Laufschienen (10) sind oberhalb der Greifvorrichtung (20), insbesondere auch oberhalb der Klemmvorrichtung (40), angeordnet.

14. Vorrichtung nach Anspruch 13, welche einen Glastafel-Greifer (12) zum Befördern der Glastafel (3, 4) in die für das Ablegen der Folie benötigte Position aufweist, welcher Saugereinrichtungen (16) enthält und ebenfalls auf den Laufschienen (10) verfahrbar ist.

15. Vorrichtung nach einem der Ansprüche 11 bis 14, in welcher die Auflage (6) für eine Glastafel (3) mehrere antreibbare Rollen (8) enthält, deren Drehachsen in einer horizontalen Ebene liegen.
